# FASCICULE DE BREVET EUROPEEN

(11) **EP 2 542 794 B1**
(45) Date de publication et mention de la délivrance du brevet: **25.12.2013**
(21) Numéro de dépôt: 11723547.3
(22) Date de dépôt: 02.05.2011
(51) Int. Cl.: F16D 3/12

(54) **TRANSMISSION ROTATIVE FLEXIBLE ANTI VIBRATIONS**
SCHWINGUNGSVERHINDERNDES FLEXIBLES DREHGETRIEBE
ANTIVIBRATION FLEXIBLE ROTARY TRANSMISSION

(30) Priorité: 01.03.2010 FR 1051466
(43) Date de publication de la demande: 09.01.2013
(73) Titulaire: Inderflex - Technoflex, 77820 Le Chatelet en Brie (FR)
(72) Inventeur: TORES, Denis, F-77000 Vaux le Penil 77000 (FR)
(74) Mandataire: Derambure, Christian
(86) Numéro de dépôt international: PCT/FR2011/050993
(87) Numéro de publication internationale: WO 2011/107722

(56) Documents cités:
- EP-A1- 2 514 981
- DE-C- 188 072
- FR-A- 1 349 209
- FR-A1- 2 481 768
- FR-A1- 2 847 313
- GB-A- 950 472
- US-A- 4 551 115

## Description

L'invention est relative à une transmission rotative flexible anti vibrations.

L'invention a plus spécialement pour objet une transmission rotative flexible, un ensemble comprenant arbre flexible, deux organes d'accouplement et un tube compensateur destiné à former une telle transmission rotative flexible et, enfin, un dispositif comprenant un organe moteur menant à rotation, un organe mené à rotation et une telle transmission rotative flexible.

On connaît déjà des transmissions rotatives flexibles du type comportant un arbre intérieur flexible, deux organes d'accouplement aux deux extrémités de l'arbre flexible et une gaine extérieure tubulaire, flexible s'étendant entre les deux parties extrêmes libres des organes d'accouplement. Les organes d'accouplement sont agencés pour pouvoir être accouplés mécaniquement, l'un à un moyen moteur menant et l'autre à un moyen mené.

De telles transmissions rotatives flexibles sont aptes et destinées à être mises en oeuvre et utilisées dans nombre d'applications et de dispositifs tels que les machines outil, cet exemple n'étant qu'illustratif.

Bien entendu, il existe un jeu radial entre la face périphérique extérieure de l'arbre flexible et la face périphérique intérieure de la gaine extérieure.

Dans une réalisation typique, le diamètre extérieur des organes d'accouplement est légèrement plus grand que le diamètre intérieur de la gaine extérieure et il existe un jeu radial entre la face périphérique extérieure des organes d'accouplement et la face périphérique intérieure de la gaine extérieure, ce qui augmente d'autant le jeu radial entre l'arbre flexible et la gaine extérieure.

Par exemple, dans une réalisation, l'arbre flexible a un diamètre extérieur de 4 mm, les organes d'accouplement ont un diamètre extérieur de 6 mm et la gaine a un diamètre intérieur de 6,2 mm. Le jeu radial entre l'arbre flexible et la gaine extérieure est alors de 2,2 mm.

Un tel jeu est gênant car il provoque des vibrations et du bruit à vitesse de rotation élevée.

L'état de la technique enseigne qu'un tel jeu à l'endroit des organes d'accouplement est gênant et qu'il peut lui être remédié à ce problème en prévoyant des saillies annulaires.

Une telle solution ne peut être appliquée efficacement à l'arbre flexible lui-même.

De manière très différente, il est également connu de l'état de la technique, les documents EP-2514981, FR-2481768, FR-2847313 et le document US-A-4,551,115 qui décrit un dispositif de transmission comportant une pièce d'entraînement et une pièce entraînée. Le dispositif de transmission est spécialement adapté pour des véhicules et présente la particularité d'atténuer les vibrations. Selon cette réalisation, la pièce d'entraînement, de forme générale parallélépipédique, et la pièce entraînée, de forme générale cylindrique, sont agencées de manière concentrique par rapport à un axe de rotation. Un espace est formé entre la surface périphérique extérieure de la pièce d'entraînement et la surface périphérique intérieure de la pièce entraînée, à l'intérieur duquel sont disposés plusieurs éléments en élastomère. De cette façon, la rotation de la pièce d'entraînement par rapport à la pièce entraînée comprime les éléments élastomères ce qui génère un transfert plus souple du couple de torsion vers la pièce entraînée et atténue les vibrations.

Toutefois, cette réalisation ne permet pas d'assurer une transmission rotative flexible telle que visée par l'invention puisqu'elle ne met pas en jeu d'arbre intérieur flexible. En outre, l'utilisation d'éléments en néoprène tels que décrits dans ce document ne peut présenter d'intérêt que dans l'hypothèse où l'arbre d'entraînement et l'arbre entraîné ont une section parallélépipédique. Ils ne seraient, au contraire, d'aucune utilité pour combler le jeu entre un arbre intérieur flexible et une gaine extérieure.

L'invention a donc pour but d'apporter une solution à l'un de ces problèmes.

A cet effet, selon un premier aspect, l'invention a pour objet une transmission rotative flexible du type comportant un arbre intérieur flexible, deux organes d'accouplement aux deux extrémités de l'arbre flexible, une gaine extérieure tubulaire, flexible s'étendant entre les deux parties extrêmes libres des deux organes d'accouplement, et un jeu radial entre la face périphérique extérieure des deux organes d'accouplement et la face périphérique intérieure de la gaine extérieure et un jeu radial plus important entre la face périphérique de l'arbre flexible et la face périphérique intérieure de la gaine extérieure.

Une telle transmission rotative flexible est telle que le jeu radial arbre-gaine est comblé au moins pour partie par un tube compensateur rapporté monté sur et à l'extérieur de l'arbre flexible, ajusté avec faible jeu à l'intérieur de la gaine extérieure, un matériau de lubrification étant interposé entre la face périphérique extérieure de l'arbre flexible et la face intérieure du tube compensateur.

Selon une réalisation, le jeu radial tube compensateur-gaine est le jeu minimal permettant le fonctionnement de la transmission rotative flexible.

Selon une réalisation, le tube compensateur s'étend axialement au moins sensiblement entre les deux épaulements radiaux intérieurs des deux organes d'accouplement.

Selon une réalisation, le tube compensateur est réalisé en un matériau à faible coefficient de frottement ou ayant reçu un traitement propre à lui conférer un faible coefficient de frottement ou comportant une garniture en un matériau à faible coefficient de frottement, au moins du côté de sa face intérieure.

Selon une réalisation, le tube compensateur est laissé à rotation libre.

Selon une réalisation, le jeu radial tube compensateur-gaine est choisi pour permettre le montage par coulissement axial de l'ensemble arbre intérieur flexible-organes d'accouplement-tube compensateur dans la gaine extérieure, sans nécessité de permettre la rotation du tube compensateur dans la gaine lors du fonctionnement de la transmission rotative flexible.

Selon une réalisation, il est prévu des moyens de blocage axial de l'ensemble arbre intérieur flexible-organes d'accouplement par rapport à la gaine extérieure extrinsèque à la transmission.

Selon un deuxième aspect, l'invention a pour objet un ensemble comprenant un arbre intérieur flexible, deux organes d'accouplement aux deux extrémités de l'arbre flexible et un tube compensateur rapporté monté sur et à l'extérieur de l'arbre flexible, un matériau de lubrification étant interposé entre la face périphérique extérieure de l'arbre flexible et la face intérieure du tube compensateur, spécialement destiné à faire partie d'une transmission rotative flexible telle que décrite précédemment, étant monté par coulissement axial dans une gaine extérieure, tubulaire, flexible.

Selon un troisième aspect, l'invention a pour objet un dispositif comprenant un organe moteur menant à rotation, un organe mené à rotation et une transmission rotative flexible telle qu'elle que décrite.

Selon une réalisation, la gaine est montée de manière à venir en blocage à l'une et à l'autre de ses extrémités libres sur deux faces d'arrêt associés aux organes menant et mené.

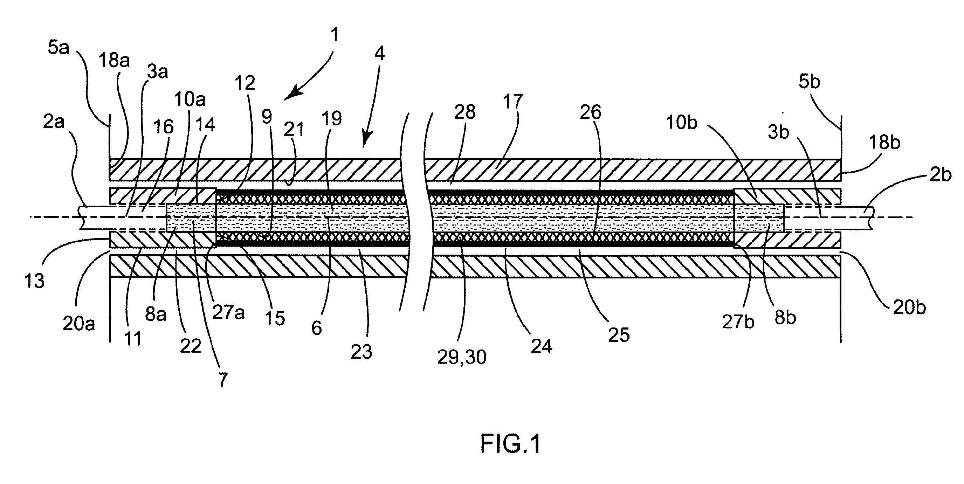

On décrit maintenant l'invention en référence à la figure unique annexée qui est une vue en coupe par un plan axial d'un dispositif comprenant un organe moteur menant à rotation, un organe mené à rotation et une transmission rotative flexible, l'axe de la transmission étant ici représenté rectiligne pour des raisons de simplification.

Sur la figure est représenté un dispositif 1 du type comprenant un organe moteur menant à rotation 2a, un organe mené à rotation 2b, d'axes 3a et 3b, respectivement et une transmission rotative flexible 4 assurant l'entraînement en rotation de l'organe mené 2b autour de son axe 3b, du fait de la rotation de l'organe menant 2a autour de son axe 3a.

Un tel dispositif 1 peut, par exemple, faire partie d'une machine outil, cet exemple n'étant qu'illustratif.

Le dispositif 1 comporte également deux faces d'arrêt 5a et 5b, associées, respectivement, aux organes menant et mené 2a et 2b. Une telle face d'arrêt 5a, 5b est par exemple la face extérieure d'un carter dont saille l'organe menant 2a, mené 2b.

La transmission 3 est flexible, de sorte que les axes 3a et 3b ne sont pas forcément coaxiaux ni même parallèles, la figure représentant une transmission ayant un axe longitudinal 6 rectiligne pour des raisons de simplification.

La transmission 4 comporte un arbre intérieur flexible 7, apte à restituer vers sa partie extrême 8b située vers l'organe mené 2b le moment de rotation qui lui est appliqué vers sa partie extrême 8a située vers l'organe menant 2a. Cet arbre flexible 7 est par exemple métallique.

L'arbre flexible 7 comporte une face latérale périphérique extérieure 9, de section droite transversale circulaire, de diamètre d₁.

La transmission 4 comporte également deux organes d'accouplement 10a et 10b fixés rigidement, et ainsi accouplés, respectivement, aux deux parties extrêmes 8a et 8b de l'arbre flexible 7.

Chaque organe d'accouplement 10a, 10b a une forme de douille comportant une face latérale périphérique extérieure 11, de section droite transversale circulaire de diamètre d₂, une face transversale intérieure 12 et une face transversale extérieure libre 13.

Dans la réalisation représentée, un trou 14 est ménagé dans la face transversale intérieure 12 dans lequel est sertie ou fixée autrement la partie extrême 8a, 8b de l'arbre flexible 7. Il est ainsi ménagé autour du trou 14, un épaulement 15 annulaire transversal.

Un autre trou 16 est ménagé dans la face transversale extérieure 13 dans lequel peut être monté et fixé, et ainsi accouplé, l'organe 2a, 2b.

La transmission 4 comporte également une gaine 17, extérieure tubulaire et flexible. Une telle gaine 17 est réalisée par exemple en matière plastique offrant une qualité permettant d'éviter la détérioration de l'arbre flexible 7 et des organes d'accouplement 10a et 10b.

La gaine 17 s'étend entre les deux parties extrêmes libres des deux organes d'accouplement 10a et 10b, à savoir leurs faces transversales extérieures libres 13a, 13b.

Les deux faces d'extrémité transversales libres 18a et 18b de la gaine 17 sont aptes et destinées à venir en blocage sur les faces d'arrêt respectives 5a et 5b.

La gaine 17 est tubulaire et comporte un espace intérieur 19 la traversant de part en part, entre les deux faces d'extrémité transversales libres 18a et 18b, où il débouche par des ouvertures 20a et 20b. Cet espace intérieur 19 est limité par une face latérale périphérique intérieure 21, de section droite transversale circulaire de diamètre d₃.

Le diamètre d₁ de l'arbre flexible 7 est légèrement inférieur au diamètre d₂ des organes d'accouplement 10a, 10b, un épaulement annulaire transversal intérieur 15a, 15b étant ménagé comme indiqué précédemment.

Le diamètre intérieur d₃ de la gaine est légèrement supérieur au diamètre d₂ des organes d'accouplement 10a, 10b.

Ainsi, un jeu radial 22 est ménagé entre la face périphérique extérieure 11 des deux organes d'accouplement 10a et 10b et la face périphérique intérieure 21 de la gaine extérieure 17. Ce jeu est celui nécessaire au bon fonctionnement de la transmission, à savoir la rotation des organes d'accouplement 10a et 10b par rapport à la gaine 17, fixe en rotation.

Compte tenu que d₃ est légèrement supérieur à d₂, un jeu radial 23, plus important, est ménagé entre la face latérale périphérique 9 de l'arbre flexible 7 et la face périphérique intérieure 21 de la gaine extérieure 17. Ce jeu est en soi source de vibrations et de bruit gênant.

Ce jeu radial arbre-gaine 23 est comblé au moins pour partie par un tube compensateur 24.

Le tube compensateur 24 est rapporté. Il est monté sur et à l'extérieur de l'arbre flexible 7. Il comporte une face périphérique extérieure 25, une face périphérique intérieure 26 et deux faces transversales d'extrémité 27a et 27b. Il a en section droite transversale une forme d'anneau circulaire de diamètre intérieur d₄ et de diamètre extérieur d₆.

Le diamètre extérieur d₄ du tube compensateur 24 est légèrement inférieur au diamètre intérieur d₃ de la gaine 17.

Ainsi, un jeu radial 28 est ménagé entre la face périphérique extérieure 25 du tube compensateur 24 et la face périphérique intérieure 21 de la gaine extérieure 17. Ce jeu 28 est le jeu minimal permettant le fonctionnement de la transmission rotative flexible 4.

Le diamètre intérieur d₅ du tube compensateur 24 est légèrement supérieur au diamètre extérieur d₁ de l'arbre flexible 7.

Ainsi, un jeu radial 29 est ménagé entre la face périphérique intérieure 26 du tube compensateur 24 et la face périphérique extérieure 9 de l'arbre flexible 7.

Un matériau de lubrification 30 est interposé entre la face périphérique extérieure 9 de l'arbre flexible 7 et la face périphérique intérieure 26 du tube compensateur 14.

Le tube compensateur 24 s'étend axialement au moins sensiblement entre les deux épaulements radiaux transversaux intérieurs 15a et 15b des deux organes d'accouplement 10a et 10b.

Le tube compensateur 24 est réalisé en un matériau à faible coefficient de frottement ou il a reçu un traitement propre à lui conférer un faible coefficient de frottement ou il comporte une garniture en un matériau à faible coefficient de frottement, au moins du côté de sa face intérieure 26.

Le tube compensateur 24 est laissé à rotation libre.

Le jeu radial tube compensateur-gaine 28 est choisi pour permettre le montage par coulissement axial de l'ensemble arbre intérieur flexible-organes d'accouplement-tube compensateur 7-10a-10b-24 dans la gaine extérieure 17, sans la nécessité de permettre la rotation du tube compensateur 24 dans la gaine 17 lors du fonctionnement de la transmission 4.

Ainsi que cela résulté de la description qui précède, il est prévu des moyens de blocage axial de l'ensemble arbre intérieur flexible-organes d'accouplement-tube compensateur 7-10a-10b-24 par rapport à la gaine extérieure 17. Ces moyens de blocage sont extrinsèques à la transmission 4 et constitués par la coopération des faces d'extrémité transversale 18a et 18b de la gaine 17 avec les faces d'arrêt 5a et 5b, respectivement.

## Revendications

1. Transmission rotative flexible (4) pour l'entraînement en rotation d'un organe mené (2b) d'axe (3b), du fait de la rotation d'un organe menant (2a) d'axe (3a), les axes (3a, 3b) n'étant pas forcément coaxiaux ou parallèles, comportant :
- un arbre (7), intérieur, flexible, de section circulaire apte à restituer vers sa partie extrême (8b) située vers l'organe mené (2b) le moment de rotation qui lui est appliqué vers sa partie extrême (8a) située vers l'organe menant (2a),
- deux organes d'accouplement (10a, 10b) avec une face latérale extérieure (11) de section circulaire, une face transversale intérieure (12) où est fixée la partie extrême (8a, 8b) de l'arbre (7) et ménageant un épaulement (15) annulaire transversal, et une face transversale extérieure (13a, 13b) où peut être fixé l'organe menant, mené (2a, 2b),
- une gaine (17), extérieure, tubulaire, flexible, fixe en rotation, évitant la détérioration de l'arbre (7) et des organes d'accouplement (10a, 10b), ayant deux faces d'extrémité transversales (18a, 18b) s'étendant entre les faces (13a, 13b) des organes d'accouplement (10a, 10b) et une face latérale intérieure (21) de section circulaire,
- un jeu radial (22) entre la face extérieure (11) des organes d'accouplement (10a, 10b) et la face intérieure (21) de la gaine (17) et un jeu radial (23) plus grand entre la face extérieure (9) de l'arbre (7) et la face intérieure (21) de la gaine (17),
**caractérisée par le fait que**
- le jeu radial (23) entre la face extérieure (9) de l'arbre (7) et la face intérieure (21) de la gaine (17) est comblé au moins pour partie par un tube compensateur (24) :
- ayant une face extérieure (25), une face intérieure (26), deux faces transversales d'extrémité (27a, 27b), et une section en forme d'anneau circulaire,
- rapporté monté sur et à l'extérieur de l'arbre (7), un jeu radial (29) étant ménagé entre la face intérieure (26) du tube compensateur (24) et la face extérieure (9) de l'arbre (7),
- ajusté à l'intérieur de la gaine (17), un jeu radial (28) permettant le fonctionnement de la transmission rotative flexible (4) étant ménagé entre la face extérieure (25) du tube compensateur (24) et la face intérieure (21) de la gaine (17),
- un matériau de lubrification (30) est interposé entre la face extérieure (9) de l'arbre (7) et la face intérieure (26) du tube compensateur (24).

2. Transmission rotative flexible (4) selon la revendication 1, **caractérisée par le fait que** le tube compensateur (24) s'étend axialement au moins sensiblement entre les deux épaulements radiaux intérieurs (15) des deux organes d'accouplement (10a, 10b).

3. Transmission rotative flexible (4) selon l'une quelconque des revendications 1 et 2, **caractérisée par le fait que** le tube compensateur (24) est réalisé en un matériau à faible coefficient de frottement ou ayant reçu un traitement propre à lui conférer un faible coefficient de frottement ou comportant une garniture en un matériau à faible coefficient de frottement, au moins du côté de sa face intérieure (26).

4. Transmission rotative flexible (4) selon l'une quelconque des revendications 1 à 3, **caractérisée par le fait que** le tube compensateur (24) est laissé à rotation libre.

5. Transmission rotative flexible (4) selon l'une quelconque des revendications 1 à 4, **caractérisée par le fait que** le jeu radial (28) est choisi pour permettre le montage par coulissement axial de l'ensemble (7 + 10a + 10b + 24) arbre - organes d'accouplement - tube compensateur dans la gaine (17), sans nécessité de permettre la rotation du tube compensateur (24) dans la gaine (17) lors du fonctionnement de la transmission rotative flexible (4).

6. Transmission rotative flexible (4) selon l'une quelconque des revendications 1 à 5, **caractérisée par** des moyens de blocage axial (5a, 5b) de l'ensemble (7 + 10a + 10b) arbre intérieur flexible -organes d'accouplement par rapport à la gaine extérieure flexible (17), extrinsèques à la transmission rotative flexible (4).

7. Ensemble comprenant :
- un arbre intérieur flexible (7), de section circulaire, apte à restituer vers sa partie extrême (8b) le moment de rotation qui lui est appliqué vers sa partie extrême (8a),
- deux organes d'accouplement (10a, 10b) avec une face latérale extérieure (11) de section circulaire, une face transversale intérieure (12) où est fixée la partie extrême (8a, 8b) de l'arbre (7) et ménageant un épaulement (15) annulaire transversal, et une face transversale extérieure (13a, 13b),
- un tube compensateur (24) ayant une face extérieure (25), une face intérieure (26), deux faces transversales d'extrémité (27a, 27b), et une section en forme d'anneau circulaire, rapporté monté sur et à l'extérieur de l'arbre (7), un jeu radial (29) étant ménagé entre la face intérieure (26) du tube compensateur (24) et la face extérieure (9) de l'arbre (7),
- un matériau de lubrification (30) interposé entre la face extérieure (9) de l'arbre (7) et la face intérieure (26) du tube compensateur (24),
spécialement destiné à faire partie d'une transmission rotative flexible (4) selon l'une quelconque des revendications 1 à 6 en étant monté par coulissement axial dans une gaine extérieure flexible (17), ayant deux faces d'extrémité transversales (18a, 18b) et une face latérale intérieure (21) de section circulaire, de sorte que le tube compensateur (24) soit ajusté à l'intérieur de la gaine (17) avec un jeu radial (28) entre la face extérieure (25) du tube compensateur (24) et la face intérieure (21) de la gaine (17) et qu'un jeu radial (22) soit ménagé entre la face extérieure (11) des organes d'accouplement (10a, 10b) et la face intérieure (21) de la gaine (17) et un jeu radial (23) plus grand entre la face extérieure (9) de l'arbre (7) et la face intérieure (21) de la gaine (17).

8. Dispositif comprenant un organe moteur menant à rotation (2a), un organe mené à rotation (2b) et une transmission rotative flexible (4) selon l'une quelconque des revendications 1 à 6, dont les organes d'accouplement (10a, 10b) sont accouplés aux organes menant et mené (2a, 2b).

9. Dispositif selon la revendication 8, **caractérisé par le fait que** la gaine extérieure flexible (17) est montée de manière à venir en blocage à l'une et à l'autre de ses extrémités libres (18a, 18b) sur deux faces d'arrêt (5a, 5b) associés aux organes menant et mené (2a, 2b).

## Patentansprüche

1. Flexibles Drehgetriebe (4) für den Drehantrieb eines Abtriebselements (2b) einer Achse (3b) aufgrund der Drehung eines Antriebselements (2a) einer Achse (3a), wobei die Achsen (3a, 3b) nicht zwingend koaxial oder parallel sind, mit:
- einer inneren flexiblen Welle (7) mit kreisförmigem Querschnitt, die dafür geeignet ist, das Drehmoment, mit dem sie zu ihrem Endteil (8a), das zu dem Antriebselement (2a) hin befindlich ist, hin beaufschlagt wird, zu ihrem Endteil (8b), das zu dem Abtriebselement (2b) hin befindlich ist, hin abzugeben,
- zwei Kupplungselementen (10a, 10b) mit einer äußeren Seitenfläche (11) mit kreisförmigem Querschnitt, einer inneren Querfläche (12), wo der Endteil (8a, 8b) der Welle (7) befestigt ist und die einen quergerichteten ringförmigen Absatz (15) bildet, und einer äußeren Querfläche (13a, 13b), wo das Antriebs-, Abtriebselement (2a, 2b) befestigt werden kann,
- einer drehfesten, flexiblen, rohrförmigen, äußeren Hülle (17) zur Vermeidung der Beschädigung der Welle (7) und der Kupplungselemente (10a, 10b), die zwei quergerichtete Endflächen (18a, 18b), die sich zwischen den Flächen (13a, 13b) der Kupplungselemente (10a, 10b) erstrecken, und eine innere Seitenfläche (21) mit kreisförmigem Querschnitt hat,
- einem radialen Spiel (22) zwischen der äußeren Fläche (11) der Kupplungselemente (10a, 10b) und der inneren Fläche (21) der Hülle (17) und einem größeren radialen Spiel (23) zwischen der äußeren Fläche (9) der Welle (7) und der inneren Fläche (21) der Hülle (17),
**dadurch gekennzeichnet, dass**
- das radiale Spiel (23) zwischen der äußeren Fläche (9) der Welle (7) und der inneren Fläche (21) der Hülle (17) zumindest teilweise durch ein Ausgleichsrohr (24) gefüllt ist:
- mit einer äußeren Fläche (25), einer inneren Fläche (26), zwei quergerichteten Endflächen (27a, 27b) und einem Querschnitt in Form eines kreisförmigen Ringes,
- das auf und außen an der Welle (7) montiert angebracht ist, wobei ein radiales Spiel (29) zwischen der inneren Fläche (26) des Ausgleichsrohrs (24) und der äußeren Fläche (9) der Welle (7) gebildet ist,
- das an das Innere der Hülle (17) angepasst ist, wobei ein radiales Spiel (28), das den Betrieb des flexiblen Drehgetriebes (4) ermöglicht, zwischen der äußeren Fläche (25) des Ausgleichsrohrs (24) und der inneren Fläche (21) der Hülle (17) gebildet ist,
- ein Schmierstoff (30) zwischen der äußeren Fläche (9) der Welle (7) und der inneren Fläche (26) des Ausgleichsrohrs (24) eingebracht ist.

2. Flexibles Drehgetriebe (4) nach Anspruch 1, **dadurch gekennzeichnet, dass** das Ausgleichsrohr (24) sich in axialer Richtung zumindest im Wesentlichen zwischen den zwei inneren radialen Absätzen (15) der Kupplungselemente (10a, 10b) erstreckt.

3. Flexibles Drehgetriebe (4) nach einem der Ansprüche 1 und 2, **dadurch gekennzeichnet, dass** das Ausgleichsrohr (24) aus einem Material mit niedrigem Reibungskoeffizient hergestellt ist oder einer Behandlung unterzogen wurde, die dafür geeignet ist, ihm einen niedrigen Reibungskoeffizienten zu verleihen, oder einen Belag aus einem Material mit niedrigem Reibungskoeffizient aufweist, zumindest auf der Seite seiner inneren Fläche (26).

4. Flexibles Drehgetriebe (4) nach einem der Ansprüche 1 bis 3, **dadurch gekennzeichnet, dass** das Ausgleichsrohr (24) frei drehbar belassen wird.

5. Flexibles Drehgetriebe (4) nach einem der Ansprüche 1 bis 4, **dadurch gekennzeichnet, dass** das radiale Spiel (28) gewählt ist, um die Montage durch axiale Verschiebung der Anordnung (7 + 10a + 10b + 24) Welle-Kupplungselemente-Ausgleichsrohr in der Hülle (17) zu ermöglichen, ohne Notwendigkeit, die Drehung des Ausgleichsrohrs (24) in der Hülle (17) beim Betrieb des flexiblen Drehgetriebes (4) zu ermöglichen.

6. Flexibles Drehgetriebe (4) nach einem der Ansprüche 1 bis 5, **gekennzeichnet durch** Mittel zum axialen Blockieren (5a, 5b) der Anordnung (7 + 10a + 10b) flexible innere Welle-Kupplungsorgane relativ zu der flexiblen äußeren Welle (17), außerhalb des flexiblen Drehgetriebes (4).

7. Anordnung, umfassend:
- eine flexible innere Welle (7) mit kreisförmigem Querschnitt, die dafür geeignet ist, das Drehmoment, mit dem sie zu ihrem Endteil (8a) hin beaufschlagt wird, zu ihrem Endteil (8b) hin abzugeben,
- zwei Kupplungselemente (10a, 10b) mit einer äußeren Seitenfläche (11) mit kreisförmigem Querschnitt, einer inneren Querfläche (12), wo der Endteil (8a, 8b) der Welle (7) befestigt ist und die einen quergerichteten ringförmigen Absatz (15) bildet, und einer äußeren Querfläche (13a, 13b),
- ein Ausgleichsrohr (24) mit einer äußeren Fläche (25), einer inneren Fläche (26), zwei quergerichteten Endflächen (27a, 27b) und einem Querschnitt in Form eines kreisförmigen Ringes, das auf und außen an der Welle (7) montiert angebracht ist, wobei ein radiales Spiel (29) zwischen der inneren Fläche (26) des Ausgleichsrohrs (24) und der äußeren Fläche (9) der Welle (7) gebildet ist,
- einen Schmierstoff (30), der zwischen der äußeren Fläche (9) der Welle (7) und der inneren Fläche (26) des Ausgleichsrohrs (24) eingebracht ist,
die insbesondere dazu bestimmt ist, Teil eines flexiblen Drehgewindes (4) nach einem der Ansprüche 1 bis 6 zu sein, indem sie durch axiale Verschiebung in einer flexiblen äußeren Hülle (17) montiert ist, die zwei quergerichtete Endflächen (18a, 18b) und eine innere Seitenfläche (21) mit kreisförmigem Querschnitt hat, so dass das Ausgleichsrohr (24) an das Innere der Hülle (17) angepasst ist mit einem radialen Spiel (28) zwischen der äußeren Fläche (25) des Ausgleichsrohrs (24) und der inneren Fläche (21) der Hülle (17) und dass ein radiales Spiel (22) zwischen der äußeren Fläche (11) der Kupplungselemente (10a, 10b) und der inneren Fläche (21) der Hülle (17) und ein größeres radiales Spiel (23) zwischen der äußeren Fläche (9) der Welle (7) und der inneren Fläche (21) der Hülle (17) gebildet wird.

8. Vorrichtung umfassend ein Drehantriebselement (2a), ein Drehabtriebselement (2b) und ein flexibles Drehgetriebe (4) nach einem der Ansprüche 1 bis 6, deren Kupplungselemente (10a, 10b) an das Antriebs- und Abtriebselement (2a, 2b) gekoppelt sind.

9. Vorrichtung nach Anspruch 8, **dadurch gekennzeichnet, dass** die flexible äußere Hülle (17) derart montiert ist, dass sie an dem einen und an dem anderen ihrer freien Enden (18a, 18b) an zwei Anschlagflächen (5a, 5b), die dem Antriebs- und Abtriebselement (2a, 2b) zugeordnet sind, zum Blockieren kommt.

## Claims

1. Flexible rotary transmission (4) for rotating a driven member (2b) of axis (3b), due to the rotation of a driving member (2a) of axis (3a), the axes (3a, 3b) not necessarily being coaxial or parallel, comprising:
- a flexible inner shaft (7) having a circular cross-section, able to transmit to its end portion (8b) located near the driven member (2b) the torque which is applied to its end portion (8a) located near the drive member (2a),
- two coupling members (10a, 10b) with a side outer face (11) having a circular cross-section, a transverse inner face (12) where the end portion (8a, 8b) of the shaft (7) is attached and forming a transverse annular shoulder (15), and a transverse outer face (13a, 13b) where the driving, driven member (2a, 2b) can be attached,
- a flexible tubular outer sheath (17), rotatably fixed, preventing deterioration of the shaft (7) and coupling members (10a, 10b), having two transverse end faces (18a, 18b) extending between the faces (13a, 13b) of the coupling members (10a, 10b) and a side inner side (21) having a circular cross-section,
- a radial clearance (22) between the outer face (11) of the coupling members (10a, 10b) and the inner face (21) of the sheath (17), and a greater radial clearance (23) between the outer face (9) of the shaft (7) and the inner face (21) of the sheath (17),
**characterized by** the fact that
- the radial clearance (23) between the outer face (9) of the shaft (7) and the inner face (21) of the sheath (17) is at least partially filled in by a compensating tube (24):
- having an outer face (25), an inner face (26), two transverse end faces (27a, 27b), and a cross-section in the form of a circular ring,
- mounted externally on the shaft (7), a radial clearance (29) being arranged between the inner face (26) of the compensating tube (24) and the outer face (9) of the shaft (7),
- adjusted to the inside of the sheath (17), a radial clearance (28) which allows the operation of the flexible rotary transmission (4) being arranged between the outer face (25) of the compensating tube (24) and the inner face (21) of the sheath (17),
- a lubricating material (30) is placed between the outer face (9) of the shaft (7) and the inner face (26) of the compensating tube (24).

2. Flexible rotary transmission (4) according to claim 1, wherein the compensating tube (24) extends axially at least substantially between the two inner radial shoulders (15) of the two coupling members (10a, 10b).

3. Flexible rotary transmission (4) according to either of claims 1 and 2, wherein the compensating tube (24) is made of a material with a low coefficient of friction or having received a treatment to give it a low coefficient of friction or comprising a covering of a material having a low coefficient of friction, at least on its inner face (26).

4. Flexible rotary transmission (4) according to any of claims 1 to 3, wherein the compensating tube (24) is allowed to rotate freely.

5. Flexible rotary transmission (4) according to any of claims 1 to 4, wherein the radial clearance (28) is chosen to enable assembly by axially sliding the assembly (7 + 10a + 10b + 24) of shaft - coupling members - compensating tube in the sheath (17), without requiring that the compensating tube (24) be allowed to rotate in the sheath (17) during the operation of the flexible rotary transmission (4).

6. Flexible rotary transmission (4) according to any of claims 1 to 5, wherein there are means (5a, 5b) for axially locking the assembly (7 + 10a + 10b) of flexible inner shaft - coupling members relative to the flexible outer sheath (17), extrinsic to the flexible rotary transmission (4).

7. Assembly comprising:
- a flexible inner shaft (7) having a circular cross-section, able to transmit to its end portion (8b) the torque which is applied to its end portion (8a),
- two coupling members (10a, 10b) with a side outer face (11) having a circular cross-section, a transverse inner face (12) where the end portion (8a, 8b) of the shaft (7) is attached and forming a transverse annular shoulder (15), and a transverse outer face (13a, 13b),
- a compensating tube (24) having an outer face (25), an inner face (26), two transverse end faces (27a, 27b), and a cross-section in the form of a circular ring, mounted externally on the shaft (7), a radial clearance (29) being arranged between the inner face (26) of the compensating tube (24) and the outer face (9) of the shaft (7),
- a lubricating material (30) placed between the outer face (9) of the shaft (7) and the inner face (26) of the compensating tube (24),
specifically intended to be part of a flexible rotary transmission (4) according to any of claims 1 to 6 by being assembled by sliding axially in a flexible outer sheath (17), having two transverse end faces (18a, 18b) and a side inner face (21) having a circular cross-section, such that the compensating tube (24) is adjusted to the inside of the sheath (17) with a radial clearance (28) between the outer face (25) of the compensating tube (24) and the inner face (21) of the sheath (17) and that a radial clearance (22) is arranged between the outer face (11) of the coupling members (10a, 10b) and the inner face (21) of the sheath (17) and a greater radial clearance (23) between the outer face (9) of the shaft (7) and the inner face (21) of the sheath (17).

8. Device comprising a rotating driving motor member (2a), a rotating driven member (2b), and a flexible rotary transmission (4) according to any of claims 1 to 6, in which the coupling members (10a, 10b) are coupled to the driving and driven members (2a, 2b).

9. Device according to claim 8, wherein the flexible outer sheath (17) is mounted so that each of its free ends (18a, 18b) is stopped by two stopping faces (5a, 5b) associated with the driving and driven members (2a, 2b).
